# FASCICULE DE BREVET EUROPEEN

(11) **EP 2 961 130 B1**
(45) Date de publication et mention de la délivrance du brevet: **19.09.2018**
(21) Numéro de dépôt: 15173447.2
(22) Date de dépôt: 23.06.2015
(51) Int. Cl.: H04L 29/06

(54) **PROCEDE DE GESTION DE CONTROLE D'ACCES DANS UN RESEAU EN NUAGE**
STEUERUNGSVERFAHREN DER ZUGRIFFSKONTROLLE IN EINEM CLOUD-NETZ
METHOD FOR MANAGING ACCESS CONTROL IN A CLOUD NETWORK

(30) Priorité: 27.06.2014 FR 1456082
(43) Date de publication de la demande: 30.12.2015
(73) Titulaire: Orange, 75015 Paris (FR)
(72) Inventeur: He, Ruan, 92130 Issy Les Moulineaux (FR); Zhou, Yu, 92130 Issy Les Moulineaux (FR)
(74) Mandataire: Delumeau, François Guy

(56) Documents cités:
- WO-A1-2007/047798
- WO-A2-2008/021514
- LI PAN ET AL: "Visualization framework for inter-domain access control policy integration", CHINA COMMUNICATIONS, CHINA INSTITUTE OF COMMUNICATIONS, PISCATAWAY, NJ, USA, vol. 10, no. 3, 1 mars 2013 (2013-03-01), pages 67-75, XP011499488, ISSN: 1673-5447, DOI: 10.1109/CC.2013.6488831

## Description

L'invention se rapporte au domaine général des télécommunications, et notamment aux systèmes informatiques dits « en nuage », connus également sous le nom de systèmes de « cloud computing ».

Elle concerne plus particulièrement l'accès par un utilisateur à des ressources informatiques mises à la disposition de cet utilisateur par un système de cloud computing.

Selon la définition donnée par le National Institute of Standards and Technology (NIST), l'informatique en nuage ou « cloud computing » est un modèle permettant à des utilisateurs d'accéder via un réseau, à la demande et en libre-service, à des ressources informatiques et réseaux comme un espace de stockage, de la puissance de calcul, des applications, des logiciels ou encore des services, qui sont virtualisées (i.e. rendues virtuelles) et mutualisées.

Autrement dit, les ressources informatiques et réseaux ne se trouvent plus sur un serveur local d'une entité ou sur un poste d'un utilisateur, mais sont, conformément au concept de cloud computing, dématérialisées dans un nuage composé de plusieurs serveurs distants interconnectés entre eux, et accessibles par les utilisateurs via une application réseau. Les utilisateurs peuvent ainsi accéder de manière évolutive à ces ressources, sans avoir à gérer l'infrastructure sous-jacente de gestion de ces ressources qui est souvent complexe.

Le concept de « cloud computing » est décrit plus en détails dans le document édité par l'ITU (International Telecommunication Union) intitulé « FG Cloud TR, version 1.0 - Part 1 : Introduction to the cloud ecosystem : definitions, taxonomies, use cases and high-level requirements », février 2012.

De façon connue, le « cloud computing » bénéficie de nombreux avantages :
• flexibilité et diversité des ressources qui sont mutualisées et quasiment illimitées,
• évolutivité possible des ressources, fournies à la demande,
• administration simple et automatisée des infrastructures informatiques et réseaux des entreprises, et réduction des coûts d'administration,
• etc.

Un enjeu majeur du concept de « cloud computing » est toutefois de garantir la protection et la sécurisation de l'accès aux ressources.

En effet, passer d'un environnement informatique traditionnel, sécurisé et fermé, à une infrastructure dans un nuage, ouverte et mutualisée, sur laquelle l'utilisateur ou l'entreprise n'a aucun contrôle, et qui est accessible via un réseau de télécommunications tel que le réseau public Internet, particulièrement vulnérable et sans cesse sujet aux attaques et aux piratages informatiques, n'est pas sans susciter quelques inquiétudes chez les potentiels utilisateurs en termes de sécurité.

Le contrôle d'accès apparait donc aujourd'hui pour l'ITU comme un moyen fondamental pour sécuriser l'accès à des systèmes informatiques en nuage.

Le document "Visualization Framework for Inter-Domain Access control Policy Integration", Li pan et Al; China Institute of Communications, Piscataway, NJ, USA, 1 Maars 2013, décrit le partage de ressources entre des domaines dans l'environnement informatique en nuage. De nombreux mécanismes existent dans l'état de la technique actuel pour contrôler (et sécuriser) l'accès à un système informatique (ou de façon équivalente, à un système d'information) d'entités ou d'organisations telles une entreprise.

Ces mécanismes se basent essentiellement sur deux éléments, à savoir :
• - la définition d'une politique en matière de droits d'accès formulée selon une approche sujet-objet-action, i.e. tel sujet a la permission ou non de réaliser telle action sur tel objet, et
• - la mise en oeuvre de cette politique sur réception d'une requête d'un utilisateur souhaitant accéder aux ressources offertes par le système informatique, via un contrôle des droits d'accès de l'utilisateur à ces ressources.

De tels mécanismes sont par exemple :
- le modèle de contrôle d'accès RBAC (Role-Based Access Control) décrit dans le document de R-S. Sandhu et al., « Role-Based Access Control Models », IEEE Computer 29(2), pages 38-47, 1996 ;
- le modèle de contrôle d'accès OrBAC (Organization-Based Access Control) décrit dans le document de A. Abou El Kalam et al., « Organization Based Access Control », 4th IEEE International Workshop on Policies for Distributed Systems and Networks, 2003 ;
- le modèle de contrôle d'accès ABAC, décrit dans le document de Yuan E, Tong J. "Attributed based access control (ABAC) for Web services [C]//Web Services, 2005.ICWS 2005. Proceedings. 2005 IEEE International Conference on. IEEE, 2005. ;
- le modèle MLS décrit dans les documents [B-E. Bell and L. Lapadula. Secure Computer System Unied Exposition and Multics Interpretation. Technical report, 1976] et [K-J. Biba. Integrity Considerations for Secure Computer System. Technical report, 1977].

Le modèle RBAC introduit la notion de rôle pour représenter un ensemble de sujets possédant des droits d'accès identiques. Chaque rôle offre des permissions, les rôles pouvant être attribués aux utilisateurs en fonction de leurs fonctions et de leurs responsabilités au sein d'une entreprise afin de déterminer les accès qui peuvent leurs être attribués ou refusés.

Le modèle OrBAC s'appuie sur un concept d'organisation, et permet de modéliser une variété de politiques de sécurité définies pour et par cette organisation pour l'accès à ses ressources. Plus précisément, le modèle OrBAC introduit les notions de rôles, d'activités et de vues pour permettre de définir une politique de sécurité associée à une organisation, où :
• - un rôle est un ensemble de sujets sur lequel les mêmes règles de sécurité sont appliquées ;
• - une activité est un ensemble d'actions sur lequel les mêmes règles de sécurité sont appliquées ; et
• - une vue est un ensemble d'objets sur lequel les mêmes règles de sécurité sont appliquées.

Le modèle ABAC (Attribute-based Access Control) utilise la notion d'attributs pour modéliser d'autres concepts comme ceux de rôles et d'organisations dans d'autres modèles. Dans le document de X. Jin,R. Krishnan et R. Sandhu « A unified Attribute-based Access Control Model covering DAC, MAC, RBAC » [Data and Applications Security and Privacy XXVI Lecture Notes in Computer Science Volume 7371, 2012, pp 41-55], le modèle ABAC est présenté comme un modèle générique permettant d'accéder à d'autres modèles de contrôle d'accès.

Le modèle MLS répartit les sujets et les objets en fonction de leurs niveaux de sécurité, un sujet avec un niveau de sécurité donné ne pouvant accéder à un objet de niveau de sécurité supérieur.

L'invention se situe plus particulièrement dans le contexte des systèmes en nuage à multiples domaines de sécurité (en anglais « multitenancy »), un domaine de sécurité pouvant être défini comme une unité (entreprise, département d'une entreprise, groupe de travail, ...) au sein de laquelle on définit une même politique de contrôle d'accès.

Actuellement, dans la plupart des systèmes en nuage à plusieurs locataires, les ressources de chacun des locataires sont cloisonnées dans des domaines indépendants et étanches, chaque locataire gérant indépendamment sa politique de contrôle d'accès.

Cette conception empêche malheureusement la coopération entre les différents locataires.

Ainsi, il n'existe à ce jour pas de solution permettant, dans un réseau informatique en nuage, d'établir des relations entre des domaines de sécurité mettant en oeuvre des politiques de contrôle d'accès différentes.

Il n'est par exemple pas possible, dans l'état actuel de la technique, de permettre à un sujet d'un domaine de sécurité ORBAC d'accéder à une ressource d'un domaine de sécurité MLS.

L'invention propose un mécanisme pour établir des relations d'interopérabilité entre des domaines de sécurité différents dans un réseau en nuage.

### Objet et résumé de l'invention

Ainsi, et selon un premier aspect, l'invention concerne un procédé pour définir, dans un réseau en nuage, une règle de contrôle d'accès entre une première entité et une deuxième entité, ces entités appartenant à deux domaines de sécurité mettant en oeuvre des politiques de contrôle d'accès différentes. Ce procédé comporte :
- une étape de création d'une entité virtuelle visible de chacun de ces domaines de sécurité;
- une étape de création d'une règle de contrôle d'accès entre la première entité et cette entité virtuelle, au sein du domaine de sécurité de la première entité;
- une étape de création d'une règle de contrôle d'accès entre la deuxième entité et cette même entité virtuelle au sein du domaine de sécurité de la deuxième entité;
- une étape de définition et d'enregistrement d'une relation entre les deux domaines de sécurité au moyen de cette entité virtuelle.

Selon un deuxième aspect, l'invention concerne un procédé de gestion de contrôle d'accès entre une première entité et une deuxième entité appartenant à deux domaines de sécurité dans un réseau en nuage. Ce procédé comporte :
- une étape pour déterminer si ces entités appartiennent à des domaines de sécurité mettant en oeuvre des politiques de contrôle d'accès différentes;
- si ces entités appartiennent à des domaines de sécurité mettant en oeuvre des politiques de contrôle d'accès différentes, une étape pour déterminer s'il existe une entité virtuelle (EV) établissant une relation entre lesdits domaines de sécurité (DS1, DS2), une première règle de contrôle d'accès entre la première entité et une entité virtuelle au sein du domaine de sécurité de la première entité et cette deuxième règle de contrôle d'accès entre la deuxième entité et cette entité virtuelle au sein du domaine de sécurité de la deuxième entité ; et si c'est le cas :
   - une étape de contrôle d'accès entre les première et deuxième entités en fonction desdites première et deuxième règles.

L'invention permet ainsi de construire, grâce à l'entité virtuelle visible des deux domaines de sécurité, une règle de contrôle d'accès entre des entités de deux domaines de sécurité mettant en oeuvre des politiques de sécurité différentes, voire incompatibles.

L'entité virtuelle peut être vue avec un type différent au sein des deux domaines de sécurité. Par exemple, une même entité virtuelle peut être vue comme un sujet au sein du premier domaine de sécurité et comme une ressource au sein du deuxième domaine de sécurité.

Dans un mode particulier de réalisation, le procédé de gestion de contrôle d'accès selon l'invention comporte :
- si les première et deuxième dites entités appartiennent à des domaines de sécurité mettant en oeuvre une même politique de contrôle d'accès, une étape de contrôle d'accès entre ces première et deuxième entités en fonction de cette politique de contrôle d'accès commune.

On peut ainsi effectuer une politique de contrôle d'accès intra domaine de sécurité et inter-domaines de sécurité.

Lesdites politiques de sécurité sont par exemple choisies parmi les politiques RBAC, ORBAC, ABAC, MLS.

Corrélativement, l'invention concerne un module de gestion de contrôle d'accès entre une première entité et une deuxième entité appartenant à deux domaines de sécurité dans un réseau en nuage, ce module comportant :
- des moyens pour déterminer si ces entités appartiennent à des domaines de sécurité mettant en oeuvre des politiques de contrôle d'accès différentes;
- si ces entités appartiennent à des domaines de sécurité mettant en oeuvre des politiques de contrôle d'accès différentes, des moyens pour déterminer s'il existe une entité virtuelle (EV) établissant une relation entre lesdits domaines de sécurité (DS1, DS2), une première règle de contrôle d'accès entre la première entité et cette entité virtuelle au sein du domaine de sécurité de la première entité et une deuxième règle de contrôle d'accès entre la deuxième entité et cette même entité virtuelle au sein du domaine de sécurité de la deuxième entité ; et si c'est le cas :
   - des moyens de contrôle d'accès entre lesdites première et deuxième entités en fonction de ces première et deuxième règles.

Dans un mode particulier de réalisation, les différentes étapes du procédé de gestion de contrôle d'accès sont déterminées par des instructions de programmes d'ordinateurs.

En conséquence, l'invention vise aussi un programme d'ordinateur sur un support d'informations, ce programme étant susceptible d'être mis en oeuvre par un ordinateur, ce programme comportant des instructions adaptées à la mise en oeuvre du procédé de gestion de contrôle d'accès tels que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de l'invention apparaîtront à la lumière de la description qui suit, faite en référence aux dessins annexés dans lesquels :
- la figure 1 représente un réseau en nuage dans lequel peut s'appliquer l'invention ;
- la figure 2 représente, sous forme d'organigramme, les principes étapes d'un procédé pour définir une règle de contrôle d'accès inter-domaines conforme à un mode particulier de réalisation de l'invention ; et
- la figure 3 représente, sous forme d'organigramme, les principes étapes d'un procédé de contrôle d'accès conforme à un mode particulier de réalisation de l'invention.

### Description détaillée d'un mode de réalisation

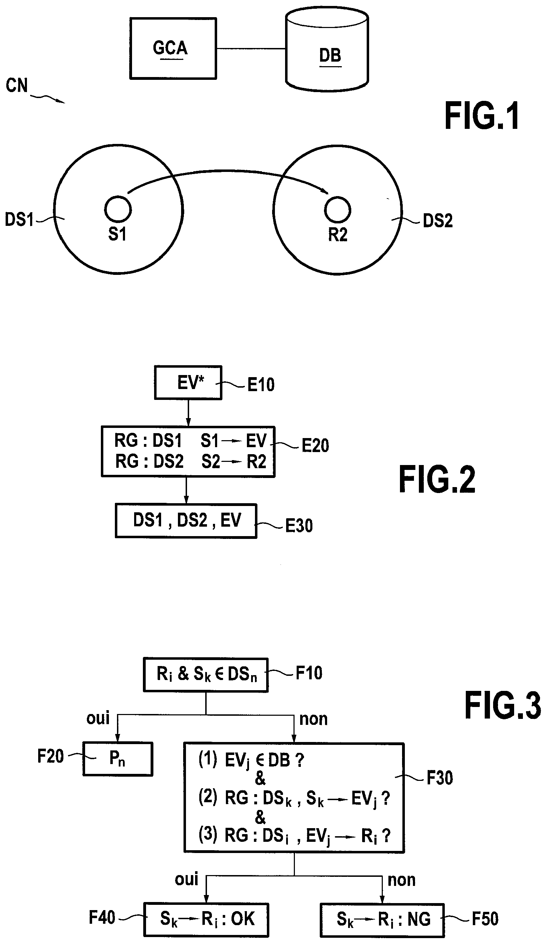

En référence à la figure 1, on considère dans cet exemple un réseau en nuage CN avec deux domaines de sécurité DS1, DS2 mettant en oeuvre des politiques de contrôle d'accès différentes, respectivement P1, P2, par exemple RBAC et MLS.

Ce réseau comporte, un gestionnaire de contrôle d'accès GCA conforme à un mode particulier de réalisation de l'invention. Ce gestionnaire de contrôle d'accès comporte des moyens pour accéder à une base de données DB dans laquelle un administrateur définit en particulier les règles de contrôle d'accès inter-domaines.

On décrit ci-après, en référence à la figure 2, comment l'invention permet à un administrateur de donner à un sujet S1 du domaine de sécurité DS1 l'accès à une ressource R2 du domaine de sécurité DS2.

Au cours d'une première étape E10, l'administrateur créée une entité virtuelle EV vue à la fois comme une ressource du domaine de sécurité DS1 et comme un sujet du domaine de sécurité DS2.

Afin de permettre l'accès à la ressource R2 par le sujet S1, l'administrateur définit, au cours d'une étape E20 :
- pour le domaine de sécurité DS1, une règle conforme à la politique de contrôle d'accès P1, permettant au sujet S1, d'accéder à la ressource virtuelle EV ; et
- pour le domaine de sécurité DS2, une règle conforme à la politique de contrôle d'accès P2, permettant au sujet virtuelle EV, d'accéder à la ressource R2.

Au cours d'une étape E30, on définit une relation entre les deux domaines de sécurité DS1, DS2 au moyen de l'entité virtuelle EV. Dans le mode de réalisation décrit ici, cette relation est enregistrée dans une base la base de données BD de la façon suivante :

| Domaine de sécurité accédant à la ressource | Domaine de sécurité offrant la ressource | Entité virtuelle permettant la relation |
|---|---|---|
| DS1 | DS2 | EV |

La figure 3 représente, sous forme d'organigramme, les principales mises en oeuvre par le gestionnaire de contrôle d'accès GCA pour autoriser ou non l'accès à une ressource Ri par un sujet Sk au sein du réseau en nuage NET.

Au cours d'une étape F10, le gestionnaire GCA détermine si la ressource Ri et le sujet Sk appartiennent au même domaine de sécurité DSn.

Si c'est le cas, le contrôle d'accès à la ressource Ri par le sujet Sk est déterminé par la politique de contrôle d'accès Pn de ce domaine de sécurité au cours d'une étape F20.

Si la ressource Ri et le sujet Sk appartiennent à deux domaines de sécurité différents, le gestionnaire de contrôle d'accès GCA détermine au cours d'une étape F30, s'il existe, dans la base de données BD, (1) une relation entre ces domaines de sécurité, autrement dit une entité virtuelle EVj, (2) une règle permettant au sujet Sk d'accéder à la ressource virtuelle EVj dans le domaine de sécurité DSk du sujet Sk et (3) une règle permettant au sujet virtuel EV d'accéder à la ressource Ri dans le domaine de sécurité DSi de la ressource Ri.

Si ces trois conditions sont réunies, le sujet Sk est autorisé à accéder à la ressource Ri au cours d'une étape F40.

Si au moins une de ces trois conditions n'est pas satisfaite, le gestionnaire de contrôle d'accès DCA refuse au sujet Sk d'accéder à la ressource Ri au cours d'une étape F50.

## Revendications

1. Procédé pour définir, dans un réseau en nuage (CN), une règle de contrôle d'accès entre une première entité (ENT1) et une deuxième entité (ENT2), ces entités appartenant à deux domaines de sécurité (DS1, DS2) mettant en oeuvre des politiques de contrôle d'accès différentes (P1, P2), ce procédé comportant :
- une étape (E10) de création d'une entité virtuelle (EV) visible de chacun desdits domaines de sécurité (DS1, DS2) ;
- une étape (E20) de création d'une règle (R1) de contrôle d'accès entre ladite première entité (ENT1) et ladite entité virtuelle (EV), au sein du domaine de sécurité (DS1) de la première entité;
- une étape (E20) de création d'une règle (R2) de contrôle d'accès entre ladite deuxième entité (ENT2) et ladite entité virtuelle (EV), au sein du domaine de sécurité (DS2) de la deuxième entité;
- une étape (E30) de définition et d'enregistrement dans une base de données (BD) d'une relation entre lesdits domaines de sécurité (DS1, DS2) au moyen de ladite entité virtuelle.

2. Procédé de gestion de contrôle d'accès entre une première entité (ENT1) et une deuxième entité (ENT2) appartenant à deux domaines de sécurité (DS1, DS2) dans un réseau en nuage (CN), ce procédé comportant :
- une étape (F10) pour déterminer à partir d'une base de données (BD) si lesdites entités (ENT1, ENT2) appartiennent à des domaines de sécurité (DS1, DS2) mettant en oeuvre des politiques de contrôle d'accès différentes;
- si lesdites entités (ENT1, ENT2) appartiennent à des domaines de sécurité (DS1, DS2) mettant en oeuvre des politiques de contrôle d'accès différentes, une étape pour déterminer s'il existe une entité virtuelle (EV) établissant une relation entre lesdits domaines de sécurité (DS1, DS2), une première règle (R1) de contrôle d'accès entre ladite première entité (ENT1) et ladite entité virtuelle (EV) au sein du domaine de sécurité (DS1) de ladite première entité et une deuxième règle (R2) de contrôle d'accès entre ladite deuxième entité (ENT2) et ladite entité virtuelle (EV) au sein du domaine de sécurité (DS2) de ladite deuxième entité ; et si c'est le cas :
- une étape (F50) de contrôle d'accès entre lesdites première (ENT1) et deuxième entités (ENT2) en fonction desdites première et deuxième règles (R1, R2).

3. Procédé de gestion de contrôle d'accès selon la revendication 2, **caractérisé en ce qu'**il comporte :
- si lesdites entités (ENT1, ENT2) appartiennent à des domaines de sécurité (DS1, DS2) mettant en oeuvre une même politique de contrôle d'accès,
- une étape (F50) de contrôle d'accès entre lesdites première (ENT1) et deuxième (ENT2) entités en fonction de ladite politique de contrôle d'accès.

4. Procédé selon l'une quelconque des revendications 1 à 3 **caractérisé en ce que** lesdites politiques de sécurité sont choisies parmi les politiques RBAC, ORBAC, ABAC, MLS.

5. Module de gestion de contrôle d'accès entre une première entité (ENT1) et une deuxième entité (ENT2) appartenant à deux domaines de sécurité (DS1, DS2) dans un réseau en nuage (CN), ce module comportant :
- des moyens pour déterminer à partir d'une base de données (BD) si lesdites entités (ENT1, ENT2) appartiennent à des domaines de sécurité (DS1, DS2) mettant en oeuvre des politiques de contrôle d'accès différentes;
- si lesdites entités (ENT1, ENT2) appartiennent à des domaines de sécurité (DS1, DS2) mettant en oeuvre des politiques de contrôle d'accès différentes, des moyens pour déterminer s'il existe une entité virtuelle (EV) établissant une relation entre lesdits domaines de sécurité (DS1, DS2), une première règle (R1) de contrôle d'accès entre ladite première entité (ENT1) et ladite entité virtuelle (EV) au sein du domaine de sécurité (DS1) de ladite première entité et une deuxième règle (R2) de contrôle d'accès entre ladite deuxième entité (ENT2) et ladite entité virtuelle (EV) au sein du domaine de sécurité (DS2) de ladite deuxième entité ; et si c'est le cas :
- des moyens de contrôle d'accès entre lesdites première (ENT1) et deuxième entités (ENT2) en fonction desdites première et deuxième règles (R1, R2).

6. Programme d'ordinateur (PG) comportant des instructions pour l'exécution des étapes du procédé de gestion de contrôle d'accès selon l'une quelconque des revendications 2 à 4, lorsque ledit programme est exécuté par un ordinateur.

7. Support d'enregistrement (13) lisible par un ordinateur sur lequel est enregistré un programme d'ordinateur (PG) comprenant des instructions pour l'exécution des étapes du procédé de gestion de contrôle d'accès selon l'une quelconque des revendications 2 à 4.

## Patentansprüche

1. Verfahren, um in einem Cloud-Netz (CN) eine Zugangskontrollregel zwischen einer ersten Einheit (ENT1) und einer zweiten Einheit (ENT2) zu definieren, wobei diese Einheiten zwei Sicherheitsbereichen (DS1, DS2) angehören, die unterschiedliche Zugangskontrollpolitiken (P1, P2) einsetzen, wobei dieses Verfahren umfasst:
- einen Schritt (E10) der Schaffung einer virtuellen Einheit (EV), die von jedem der Sicherheitsbereiche (DS1, DS2) sichtbar ist;
- einen Schritt (E20) der Schaffung einer Zugangskontrollregel (R1) zwischen der ersten Einheit (ENT1) und der virtuellen Einheit (EV) innerhalb des Sicherheitsbereichs (DS1) der ersten Einheit;
- einen Schritt (E20) der Schaffung einer Zugangskontrollregel (R2) zwischen der zweiten Einheit (ENT2) und der virtuellen Einheit (EV) innerhalb des Sicherheitsbereichs (DS2) der zweiten Einheit;
- einen Schritt (E30) der Definition und Registrierung in einer Datenbasis (BD) einer Relation zwischen den Sicherheitsbereichen (DS1, DS2) mit Hilfe der virtuellen Einheit.

2. Verfahren zur Zugangskontrollsteuerung zwischen einer ersten Einheit (ENT1) und einer zweiten Einheit (ENT2), die zwei Sicherheitsbereichen (DS1, DS2) in einem Cloud-Netz (CN) angehören, wobei dieses Verfahren umfasst:
- einen Schritt (F10), um ausgehend von einer Datenbasis (BD) zu bestimmen, ob die Einheiten (ENT1, ENT2) Sicherheitsbereichen (DS1, DS2) angehören, die unterschiedliche Zugangskontrollpolitiken einsetzen;
- wenn die Einheiten (ENT1, ENT2) Sicherheitsbereichen (DS1, DS2) angehören, die unterschiedliche Zugangskontrollpolitiken einsetzen, einen Schritt, um zu bestimmen, ob eine virtuelle Einheit (EV), die eine Relation zwischen den Sicherheitsbereichen (DS1, DS2) herstellt, eine erste Zugangskontrollregel (R1) zwischen der ersten Einheit (ENT1) und der virtuellen Einheit (EV) innerhalb des Sicherheitsbereichs (DS1) der ersten Einheit und eine zweite Zugangskontrollregel (R2) zwischen der zweiten Einheit (ENT2) und der virtuellen Einheit (EV) innerhalb des Sicherheitsbereichs (DS2) der zweiten Einheit vorhanden sind; und wenn dies der Fall ist:
- einen Schritt (F50) der Zugangskontrolle zwischen den ersten (ENT1) und zweiten Einheiten (ENT2) in Abhängigkeit von der ersten und der zweiten Regel (R1, R2).

3. Verfahren zur Zugangskontrollsteuerung nach Anspruch 2, **dadurch gekennzeichnet, dass** es umfasst:
- wenn die Einheiten (ENT1, ENT2) Sicherheitsbereichen (DS1, DS2) angehören, die eine selbe Zugangskontrollpolitik einsetzen,
- einen Schritt (F50) der Zugangskontrolle zwischen den ersten (ENT1) und zweiten Einheiten (ENT2) in Abhängigkeit von der Zugangskontrollpolitik.

4. Verfahren nach einem der Ansprüche 1 bis 3, **dadurch gekennzeichnet, dass** die Sicherheitspolitiken unter den Politiken RBAC, ORBAC, ABAC, MLS ausgewählt sind.

5. Modul zur Zugangskontrollsteuerung zwischen einer ersten Einheit (ENT1) und einer zweiten Einheit (ENT2), die zwei Sicherheitsbereichen (DS1, DS2) in einem Cloud-Netz (CN) angehören, wobei dieses Modul umfasst:
- Mittel, um ausgehend von einer Datenbasis (BD) zu bestimmen, ob die Einheiten (ENT1, ENT2) Sicherheitsbereichen (DS1, DS2) angehören, die unterschiedliche Zugangskontrollpolitiken einsetzen;
- wenn die Einheiten (ENT1, ENT2) Sicherheitsbereichen (DS1, DS2) angehören, die unterschiedliche Zugangskontrollpolitiken einsetzen, Mittel, um zu bestimmen, ob eine virtuelle Einheit (EV), die eine Relation zwischen den Sicherheitsbereichen (DS1, DS2) herstellt, eine erste Zugangskontrollregel (R1) zwischen der ersten Einheit (ENT1) und der virtuellen Einheit (EV) innerhalb des Sicherheitsbereichs (DS1) der ersten Einheit und eine zweite Zugangskontrollregel (R2) zwischen der zweiten Einheit (ENT2) und der virtuellen Einheit (EV) innerhalb des Sicherheitsbereichs (DS2) der zweiten Einheit vorhanden sind; und wenn dies der Fall ist:
- Mittel zur Zugangskontrolle zwischen den ersten (ENT1) und zweiten Einheiten (ENT2) in Abhängigkeit von der ersten und der zweiten Regel (R1, R2).

6. Computerprogramm (PG), umfassend Anweisungen für die Ausführung der Schritte des Verfahrens zur Zugangskontrollsteuerung nach einem der Ansprüche 2 bis 4, wenn das Programm von einem Computer ausgeführt wird.

7. Aufzeichnungsträger (13), der von einem Computer lesbar ist, auf dem ein Computerprogramm (PG) registriert ist, umfassend Anweisungen für die Ausführung der Schritte des Verfahrens zur Zugangskontrollsteuerung nach einem der Ansprüche 2 bis 4.

## Claims

1. Method for defining, in a cloud network (CN), a rule for control of access between a first entity (ENT1) and a second entity (ENT2), these entities belonging to two security domains (DS1, DS2) implementing different access control policies (P1, P2), this method comprising:
- a step (E10) of creating a virtual entity (EV) visible from each of said security domains (DS1, DS2);
- a step (E20) of creating a rule (R1) for control of access between said first entity (ENT1) and said virtual entity (EV), within the security domain (DS1) of the first entity;
- a step (E20) of creating a rule (R2) for control of access between said second entity (ENT2) and said virtual entity (EV), within the security domain (DS2) of the second entity;
- a step (E30) of defining and recording in a database (BD) a relation between said security domains (DS1, DS2) by means of said virtual entity.

2. Method for managing control of access between a first entity (ENT1) and a second entity (ENT2) belonging to two security domains (DS1, DS2) in a cloud network (CN), this method comprising:
- a step (F10) for determining with the help of a database (BD) whether said entities (ENT1, ENT2) belong to security domains (DS1, DS2) implementing different access control policies;
- if said entities (ENT1, ENT2) belong to security domains (DS1, DS2) implementing different access control policies, a step for determining whether there exists a virtual entity (EV) establishing a relation between said security domains (DS1, DS2), a first rule (R1) for control of access between said first entity (ENT1) and said virtual entity (EV) within the security domain (DS1) of said first entity and a second rule (R2) for control of access between said second entity (ENT2) and said virtual entity (EV) within the security domain (DS2) of said second entity; and if this is the case:
- a step (F50) of control of access between said first (ENT1) and second entities (ENT2) as a function of said first and second rules (R1, R2).

3. Method for managing control of access according to Claim 2, **characterized in that** it comprises:
- if said entities (ENT1, ENT2) belong to security domains (DS1, DS2) implementing one and the same access control policy,
- a step (F50) of control of access between said first (ENT1) and second (ENT2) entities as a function of said access control policy.

4. Method according to any one of Claims 1 to 3, **characterized in that** said security policies are chosen from among the RBAC, ORBAC, ABAC, MLS policies.

5. Module for managing control of access between a first entity (ENT1) and a second entity (ENT2) belonging to two security domains (DS1, DS2) in a cloud network (CN), this module comprising:
- means for determining with the help of a database (BD) whether said entities (ENT1, ENT2) belong to security domains (DS1, DS2) implementing different access control policies;
- if said entities (ENT1, ENT2) belong to security domains (DS1, DS2) implementing different access control policies, means for determining whether there exists a virtual entity (EV) establishing a relation between said security domains (DS1, DS2), a first rule (R1) for control of access between said first entity (ENT1) and said virtual entity (EV) within the security domain (DS1) of said first entity and a second rule (R2) for control of access between said second entity (ENT2) and said virtual entity (EV) within the security domain (DS2) of said second entity; and if this is the case:
- means for control of access between said first (ENT1) and second entities (ENT2) as a function of said first and second rules (R1, R2).

6. Computer program (PG) comprising instructions for the execution of the steps of the method for managing control of access according to any one of Claims 2 to 4, when said program is executed by a computer.

7. Recording medium (13) readable by a computer on which is recorded a computer program (PG) comprising instructions for the execution of the steps of the method for managing control of access according to any one of Claims 2 to 4.
